# EUROPÄISCHE PATENTANMELDUNG

(11) **EP 1 091 244 A1**
(43) Veröffentlichungstag der Anmeldung: **11.04.2001**
(21) Anmeldenummer: 99101781.5
(22) Anmeldetag: 15.02.1999
(51) Int. Cl.: G03B 27/62, G03B 27/46

(54) **Bildherstellungsverfahren**

(71) Anmelder: GRETAG IMAGING Trading AG, 5430 Wettingen (CH)
(72) Erfinder: Vikene, Michael, 79790 Küssaberg (DE); Löffel, Frank, 8049 Zürich (CH)
(74) Vertreter: Schwabe - Sandmair - Marx

(57) **Zusammenfassung**

Bilder wenigstens teilweise unterschiedlicher Formate werden durch pixelweise Aufzeichnung von bildweise in digitaler Form vorliegenden Bildinformationen auf ein Trägermaterial aus einer Gruppe von im wesentlichen bahnförmigen Standardträgermaterialien mit unterschiedlichen vorgegebenen Weiten hergestellt. Die Bildinformation eines Bilds wird in einer Normalorientierung oder gegenüber dieser um 90° gedreht aufgezeichnet, wenn dadurch eine Dimension des herzustellenden Bilds mit der Weite des aktuell zur Verfügung stehenden Trägermaterials in Übereinstimmung gebracht werden kann. Ein Wechsel des Trägermaterials wird durchgeführt, wenn weder die Länge noch die Breite eines herzustellenden Bilds der Weite des aktuell zur Verfügung stehenden Trägermaterials entspricht. Für einen Satz von herzustellenden Bildern wenigstens teilweise unterschiedlicher Formate wird die Reihenfolge der Aufzeichnung der ihnen zugrundeliegenden Bildinformationen nach Massgabe der Formate der herzustellenden Bilder so festgelegt, dass die Anzahl der erforderlichen Trägermaterialwechsel minimiert wird. Dazu werden die Bilder nach Massgabe ihres Formats Weitenklassen zugeordnet, welche den unterschiedlichen auftretenden Werten der Länge und der Breite der Bilder entsprechen. Die Häufigkeiten der unterschiedlichen auftretenden Werte von Länge und Breite der Bilder werden ermittelt und den einzelnen Weitenklassen werden jeweils alle diejenigen Bilder zugeordnet, deren Länge oder Breite mit dem der jeweiligen Weitenklasse entsprechenden Wert übereinstimmt, wobei die Zuordnung zu einer Weitenklasse in der Rangfolge der Häufigkeit des der Weitenklasse entsprechenden Werts erfolgt. Die Aufzeichnung der Bilder erfolgt dann weitenklassenweise auf ein der jeweiligen Weitenklasse entsprechendes Standardträgermaterial.

## Beschreibung

Die Erfindung betrifft ein Verfahren zur Herstellung von Bildern gemäss dem Oberbegriff des unabhängigen Anspruchs.

Bei der Herstellung von fotografischen Kopien wird unabhängig von der eingesetzten Technologie in der Regel mit standardisierten Bildformaten und Kopiermaterial unterschiedlicher standardisierter Weiten (Breiten) gearbeitet.

In sogenannten analogen, mit herkömmlicher Belichtung arbeitenden Minilabs wird üblicherweise Bild für Bild, in der Reihenfolge der Bildvorlagen auf dem Negativstreifen, auf das fotografische Kopiermaterial aufbelichtet. Die Voraussetzung für die Erstellung eines Bildes eines gewünschten Formats ist die Verfügbarkeit eines Kopiermaterials entsprechender Weite im Kopiergerät. Wenn das erforderliche Bildformat mit dem im Gerät aktuell verfügbaren Kopiermaterial nicht realisierbar ist, muss durch das Bedienungspersonal ein Wechsel des Kopiermaterials vorgenommen werden.

Ein zusätzlicher Freiheitsgrad ergibt sich bei den sogenannten digitalen Minilabs, welche Bilder durch pixelweise Aufzeichnung (Belichtung, Drucken) von in digitaler Form vorliegenden Bildinformationen auf ein geeignetes Trägermaterial (Foto- bzw. Druckpapier) erzeugen. Diese Geräte erlauben auch die gegenüber einer Normallage um 90° gedrehte Aufzeichnung der Bildinformation auf das Trägermaterial, so dass ein und das selbe Trägermaterial verwendet werden kann, wenn das Format des herzustellenden Bilds entweder bezüglich der Länge oder bezüglich der Breite mit der Weite des Trägermaterials übereinstimmt. Wenn dies nicht zutrifft, ist aber ebenfalls ein Wechsel des Trägermaterials erforderlich.

Ein Wechsel des Trägermaterials erfordert in der Regel das Anhalten des Bildherstellungsvorgangs und mindert somit die Produktivität des Bildherstellungsgeräts (Kopiergeräts). Die notwendige Zeit zur Verarbeitung einer Anzahl von Bildern wird durch die Anzahl der vom Bedienungspersonal durchzuführenden Trägermaterialwechsel mitbestimmt. Sobald die weitere Verarbeitung Bildformate erfordert, die mit dem aktuell verfügbaren Trägermaterial nicht realisierbar sind, wird die Verarbeitung aufgrund des neuerlich erforderlichen Trägermaterialwechsels wieder unterbrochen.

Durch die vorliegende Erfindung soll nun ein Bildherstellungsverfahren der gattungsgemässen Art dahingehend verbessert werden, dass eine schnellere Verarbeitung eines Auftrags und damit eine höhere Produktivität erreicht wird. Insbesondere sollen dabei die durch die erforderlichen Wechsel des Trägermaterials bedingten unproduktiven Phasen reduziert und die Belastung und Anwesenheitszeiten des Bedienungspersonals für das Bildherstellungsgerät verringert werden.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen des erfindungsgemässen Verfahrens sind Gegenstand der abhängigen Ansprüche.

Im folgenden wird die Erfindung anhand von zwei die Zuordnung von Bildern zu Weitenklassen veranschaulichenden Zeichnungsfiguren näher erläutert.

Im Fotofinishing wird üblicherweise bahnförmiges Aufzeichnungsmaterial (Trägermaterial) standardisierter Bahnbreiten eingesetzt, das entweder vor oder nach der Bildaufzeichnung in Einzelblätter den Formaten der herzustellenden Bilder entsprechender Längen geschnitten wird. Unter Standardträgermaterialien werden im folgenden diese Trägermaterialien standardisierter Bahnbreiten verstanden. Um eine begriffliche Unterscheidung zu der Breite der herzustellenden, üblicherweise rechteckigen Bilder zu erreichen, wird hier und im folgenden für die Bahnbreite des für die Bildaufzeichnung verwendeten (ungeschnittenen oder geschnittenen) Trägermaterials der Begriff Weite verwendet.

Die bei der Herstellung von fotografischen Bildern verwendeten Bildformate sind im allgemeinen rechteckig und in der Regel ebenfalls standardisiert. Dabei sind die Formate üblicherweise (aber nicht notwendigerweise) so auf die Standardträgermaterialien abgestimmt, dass entweder ihre Länge oder ihre Breite der Weite eines Standardträgermaterials entspricht. In Anlehnung daran werden im folgenden zwei Bilder als weitengleich bezeichnet, wenn eine Formatdimension (Länge oder Breite) des einen Bilds mit einer (beliebigen) Formatdimension des anderen Bilds übereinstimmt.

Ein beispielsweise angenommener, extrem heterogener Kopierauftrag umfasse einen der Anschaulichkeit halber relativ kleinen Satz von 12 herzustellenden Bildern mit insgesamt 7 unterschiedlichen Formaten gemäss der nachstehenden Tabelle 1:

**Tabelle 1**

| Bildnummer | Format (cm) |
|---|---|
| 1 | 9x13 |
| 2 | 13x20 |
| 3 | 7x10 |
| 4 | 20x25 |
| 5 | 10x15 |
| 6 | 13x18 |
| 7 | 6x8 |
| 8 | 9x13 |
| 9 | 13x20 |
| 10 | 13x18 |
| 11 | 20x25 |
| 12 | 9x13 |

Würden diese Bilder in konventioneller Weise, d.h. in der Reihenfolge ihrer Numerierung, mit einem konventionellen analogen Kopiergerät hergestellt, so wären insgesamt 11 bzw. 12 Wechsel des Kopierpapiers (allgemein Trägermaterials) erforderlich, je nach dem, ob die Weite des zu Beginn des Kopiervorgangs gerade im Kopiergerät befindlichen Kopierpapiers 9 oder 13 cm oder nicht 9 bzw. 13 cm beträgt. Bei Verwendung eines digitalen Kopiergeräts, welches auch die um 90° gedrehte Aufzeichnung der Bildinformation zulässt, wären bei konventioneller sequentieller Abarbeitung insgesamt 8 bzw. 9 Wechsel des Kopierpapiers erforderlich, je nach dem, ob die Weite des zu Beginn des Kopiervorgangs gerade im Kopiergerät befindlichen Kopierpapiers 13 cm oder nicht 13 cm beträgt. Wie sich aus dem folgenden ergibt, wird die Anzahl der erforderlichen Kopierpapierwechsel durch das erfindungsgemässe Verfahren in seiner allgemeinsten Form, bei der keine ggf. gedrehte Aufzeichnung zugelassen ist, beim selben Satz herzustellender Bilder auf 6 bzw. 7 Wechsel reduziert, je nach dem, wie gross die Weite des zu Beginn zur Verfügung stehenden Kopierpapiers gerade ist. In der bevorzugten Ausführungsform des erfindungsgemässen Verfahrens mit digitaler Aufzeichnung und erforderlichenfalls gedrehter Aufzeichnung der Bilder reduziert sich die Anzahl der erforderlichen Trägermaterialwechsel sogar auf 3 bzw. 4, je nach dem, ob die Weite des zu Beginn des Kopiervorgangs gerade im Kopiergerät befindlichen Kopierpapiers 13 cm oder nicht 13 cm beträgt. Bei einem in der Realität in der Regel umfangreicheren Satz von herzustellenden Bildern ist die Reduktion der erforderlichen Kopierpapierwechsel zumindest bei extrem heterogenen, d.h. viele unterschiedliche Bildformate erfordernden Aufträgen (Sätzen) gegenüber den konventionellen Herstellungsverfahren noch bedeutend ausgeprägter.

Der Kernpunkt des erfindungsgemässen Verfahrens besteht darin, die Aufzeichnung der Bilder nicht mehr sequentiell in der Reihenfolge ihrer Numerierung bzw. Lage auf dem zugrundeliegenden Negativstreifen durchzuführen, sondern die Reihenfolge der Herstellung der einzelnen Bilder, d.h. die Reihenfolge der einzelnen Belichtungsvorgänge oder der Aufzeichnung der den Bildern zugrundeliegenden, in gespeicherter digitaler Form vorliegenden Bildinformationen auf ein der eingesetzten digitalen Aufzeichnungstechnologie entsprechendes Trägermaterial, in der Weise zu optimieren, dass die Anzahl der erforderlichen Trägermaterialwechsel auf ein Minimum reduziert wird.

Gemäss dem grundlegenden Gedanken der Erfindung wird diese Optimierung dadurch erreicht, dass man die herzustellenden Bilder sogenannten Weitenklassen zuordnet und dann die Aufzeichnung auf das Trägermaterial weitenklassenweise vornimmt, wobei für jede mindestens ein Bild enthaltende Weitenklasse Trägermaterial einer anderen Weite benötigt wird. Die Aufzeichnungsreihenfolge innerhalb einer Weitenklasse ist beliebig.

In der allgemeinsten Form des erfindungsgemässen Verfahrens, welches auch für herkömmliche analoge Aufzeichnungsgeräte (Kopiergeräte) geeignet ist, ergeben sich die Weitenklassen einfach durch die unterschiedlichen im Satz der herzustellenden Bilder auftretenden Bildformate. Alle Bilder gleichen Formats werden der entsprechenden Weitenklasse zugeordnet, und dann erfolgt der Aufzeichnungsvorgang (Belichtungs- oder Kopiervorgang) einfach so, dass jeweils alle Bilder einer Weitenklasse hintereinander aufgezeichnet werden, und dann die der nächsten Weitenklasse und so weiter, bis alle Bilder aufgezeichnet sind. Die Reihenfolge der Weitenklassen an sich spielt keine Rolle, jedoch wird man, falls zutreffend, zuerst mit der Weitenklasse beginnen, die mit der Weite des aktuell zur Verfügung stehenden Trägermaterials übereinstimmt, und mit der Weitenklasse aufhören, von der erfahrungsgemäss die Wahrscheinlichkeit hoch ist, dass sie in einem nachfolgenden Satz von herzustellenden Bildern auch auftritt.

Die im folgenden erläuterte bevorzugte Ausführungsform des erfindungsgemässen Verfahrens geht davon aus, dass die Bildinformationen der herzustellenden Bilder bildweise in digitaler Form gespeichert vorliegen und dass für die Bildaufzeichnung ein modernes, pixelweise arbeitendes Aufzeichnungsgerät, z.B. ein sogenanntes digitales Minilab, eingesetzt wird, welches dazu befähigt ist, Bilder sowohl in einer definierten Normalorientierung als auch in einer zu dieser um 90° gedrehten Orientierung auf das Trägermaterial aufzeichnen zu können. Dadurch werden die Dimensionen Länge und Breite eines Bildformats gleichbedeutend, und weitengleiche Bilder können auf ein und demselben Trägermaterial aufgezeichnet werden.

Auch bei dieser Ausführungsform des erfindungsgemässen Verfahrens wird die Optimierung der Bildherstellungsreihenfolge dadurch erreicht, dass man die herzustellenden Bilder sogenannten Weitenklassen zuordnet und dann die Aufzeichnung auf das Trägermaterial weitenklassenweise vornimmt, wobei für jede mindestens ein Bild enthaltende Weitenklasse Trägermaterial einer anderen Weite benötigt wird. Die Aufzeichnungsreihenfolge innerhalb einer Weitenklasse ist auch hier wieder beliebig. Bei dieser Ausführungsform erfolgt die Zuordnung der Bilder zu den Weitenklassen in der Art, dass möglichst wenige belegte Weitenklassen entstehen bzw. verbleiben. Somit reduziert sich das Problem der Optimierung der Aufzeichnungsreihenfolge der Bilder auf die Optimierung der Zuordnung der Bilder zu Weitenklassen. Die Reihenfolge der Weitenklassen selbst ist an sich beliebig, kann jedoch im Hinblick auf zusätzliche Randbedingungen ebenfalls noch optimiert werden. Darauf wird weiter unten noch eingegangen.

In einem ersten Schritt werden von allen Bildern eines Satzes von herzustellenden Bildern diejenigen bestimmt, deren Länge oder deren Breite der Weite des aktuell im Aufzeichnungsgerät zur Verfügung stehenden Trägermaterials entspricht. Diese weitengleichen Bilder werden einer der Weite des aktuellen Trägermaterials entsprechenden Weitenklasse zugeordnet. Sie sind unmittelbar, d.h. ohne Trägermaterialwechsel herstellbar und werden entweder sofort aufgezeichnet oder ihre Weitenklasse wird als zuerst aufzuzeichnende Weitenklasse vorgemerkt, falls mit der Aufzeichnung erst zu einem späteren Zeitpunkt, z.B. nach Abschluss der Zuordnung der übrigen Bilder, begonnen werden soll.

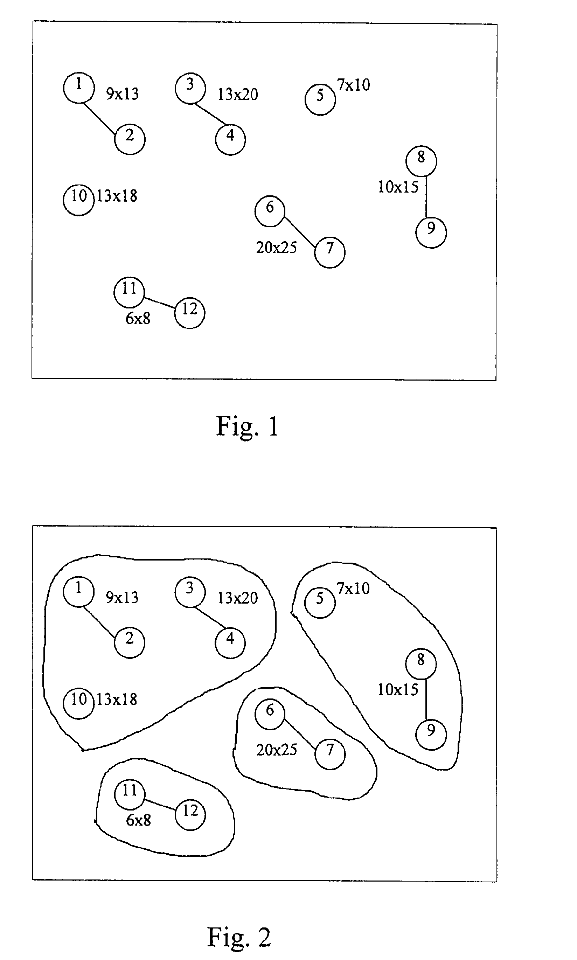

Nach diesem ersten Schritt verbleiben also nur noch die nach Trägermaterialwechsel herstellbaren Bilder, also diejenigen Bilder, für deren Aufzeichnung ein oder mehrere Trägermaterialwechsel erforderlich sind. Zur Verdeutlichung der folgenden Schritte des erfindungsgemässen Verfahrens seien 12 Bilder mit den in der nachstehenden Tabelle 2 angeführten Formaten verblieben. Die Figur 1 veranschaulicht diese Situation in grafischer Form. (Die Ähnlichkeit der Zahlenwerte der Tabelle 2 mit denen der Tabelle list willkürlich und für das folgende bedeutungslos.)

**Tabelle 2**

| Bildnummer | Format (cm) |
|---|---|
| 1,2 | 9x13 |
| 3,5 | 13x20 |
| 5 | 7x10 |
| 6,7 | 20x25 |
| 8,9 | 10x15 |
| 10 | 13x18 |
| 11,12 | 6x8 |

Um diese 12 Bilder in optimaler Weise nach Weitenklassen zu ordnen, werden zunächst die Häufigkeiten der auftretenden unterschiedlichen Werte für Längen und Breiten der 12 Bilder bestimmt. Die nachfolgende Tabelle 3 macht dies deutlich:

**Tabelle 3**

| Bildnummer | Auftretende Längen und Breiten (cm) | | | | | | | | | |
|---|---|---|---|---|---|---|---|---|---|---|
| | 6 | 7 | 8 | 9 | 10 | 13 | 15 | 18 | 20 | 25 |
| 1,2 | | | | x | | x | | | | |
| 3,4 | | | | | | x | | | x | |
| 5 | | x | | | x | | | | | |
| 6,7 | | | | | | | | | x | x |
| 8,9 | | | | | x | | x | | | |
| 10 | | | | | | x | | x | | |
| 11,12 | x | | x | | | | | | | |
| Häufigkeit | 1 | 1 | 1 | 1 | 2 | 3 | 1 | 1 | 2 | 1 |

Wie man erkennt, sind bei diesem Beispiel insgesamt 10 unterschiedliche Werte für Längen und Breiten der verbliebenen 12 herzustellenden Bilder vorhanden. Entsprechend liegen 10 verschiedene Weitenklassen vor. Einige Werte (Dimensionen) treten häufiger auf als andere. Gemäss einem weiteren wichtigen Aspekt der Erfindung erfolgt nun die Zuordnung der Bilder zu den möglichen Weitenklassen gemäss der Rangfolge der Häufigkeiten der auftretenden Werte. Im Beispiel besitzt der Wert 13 die grösste Häufigkeit, also werden zunächst alle Bilder, deren Länge oder Breite gleich 13 cm ist, der Weitenklasse 13 zugeordnet. Von den verbleibenden Bildern hat der Wert 10 die grösste Häufigkeit, so dass alle Bilder mit einer Länge oder einer Breite von 10 cm der Weitenklasse 10 zugeordnet werden. Dieser Vorgang wird so lange fortgesetzt, bis alle Bilder einer Weitenklasse zugeordnet sind. Wenn die Häufigkeiten für zwei Werte gleich gross sind, kann die Zuordnung wahlfrei erfolgen. Als Ergebnis erhält man im Beispiel eine Zuordnung der 12 Bilder zu insgesamt nur 4 Weitenklassen gemäss der nachstehenden Tabelle 4:

**Tabelle 4**

| Weitenklasse | zugeordnete Bilder |
|---|---|
| 13 | 1,2,3,4,10 |
| 10 | 5,8,9 |
| 20 (25) | 6,7 |
| 6 (8) | 11,12 |

Die Figur 2 veranschaulicht die Zuordnung der 12 Bilder zu den 4 Weitenklassen in grafischer Form.

Nach erfolgter Zuordnung der Bilder zu den passenden Weitenklassen kann die Aufzeichnung der Bildinformationen auf das Trägermaterial beginnen, wobei es an sich beliebig ist, mit welcher Weitenklasse begonnen wird. Vorzugsweise wird man jedoch die Reihenfolge der Weitenklassen so wählen, dass von den vorhandenen Weitenklassen die statistisch am häufigsten vorkommende zuletzt verarbeitet wird, um die Wahrscheinlichkeit einer günstigen Ausgangslage für einen nachfolgenden Bildherstellungszyklus zu erhöhen. Falls die Weitenklassen der Bilder eines nachfolgenden Herstellungszyklus schon bekannt sind, so ist es zweckmässig, sofern vorhanden als letzte eine solche Weitenklasse abzuarbeiten, welche in dem nachfolgenden Herstellungszyklus vorhanden ist. Dadurch kann ein weiterer Trägermaterialwechsel eingespart werden.

Es versteht sich, dass das erfindungsgemässe Verfahren mittels eines entsprechend programmierten Rechners ausgeführt wird. Die Implementierung des Verfahrens als Rechenprogramm ist für den Fachmann verhältnismässig einfach möglich und erfordert keinen substantiellen Aufwand.

Durch das erfindungsgemässe Verfahren wird die Anzahl der erforderlichen Trägermaterialwechsel minimiert. Dadurch wird eine erhebliche Beschleunigung des Bildherstellungsvorgangs mit unterschiedlichen Bildformaten erreicht. Gleichzeitig wird das Bedienungspersonal für das Aufzeichnungsgerät entlastet und werden die Zeiten, in denen das Bedienungspersonal vor Ort sein muss, verringert. Das erfindungsgemässe Verfahren lässt sich mit besonderem Vorteil in solchen digitalen Aufzeichnungsgeräten einsetzen, die dazu befähigt sind, mehrere Bildherstellungsaufträge zu speichern und quasi-synchron abzuarbeiten. Es kann dann dabei entweder eine Optimierung der Bildreihenfolge über mehrere Aufträge hinweg erfolgen oder es können die Bilder gleicher Weitenklassen aus verschiedenen Aufträgen in einem Durchgang aufbelichtet werden.

Vorstehend wurde das erfindungsgemässe Verfahren rein beispielsweise zum leichteren Verständnis im Zusammenhang mit einem analogen bzw. einem digitalen Minilab beschrieben. Es versteht sich jedoch, dass das erfindungsgemässe Verfahren auch bei einem modernen, insbesondere digitalen Hochleistungskopiergerät (digitaler High Speed Printer) eingesetzt werden kann.

## Patentansprüche

1. Verfahren zur Herstellung von im wesentlichen rechteckigen Bildern wenigstens teilweise unterschiedlicher Formate durch Aufzeichnung von bildweise vorliegenden Bildinformationen auf ein bahnförmiges oder blattförmiges Trägermaterial aus einer Gruppe von im wesentlichen bahnförmigen Standardträgermaterialien mit unterschiedlichen vorgegebenen Weiten, wobei ein Wechsel des Trägermaterials durchgeführt wird, wenn das Format eines herzustellenden Bildes nicht der Weite des aktuell zur Verfügung stehenden Trägermaterials entspricht, dadurch gekennzeichnet, dass für einen Satz von herzustellenden Bildern wenigstens teilweise unterschiedlicher Formate die Reihenfolge der Aufzeichnung der ihnen zugrundeliegenden Bildinformationen nach Massgabe der Formate der herzustellenden Bilder so festgelegt wird, dass die Anzahl der erforderlichen Trägermaterialwechsel minimiert wird.

2. Verfahren nach Anspruch 1, dadurch gekennzeichnet, dass die Bilder des Satzes der herzustellenden Bilder nach Massgabe ihres Formats Weitenklassen zugeordnet werden und dass die Aufzeichnung der Bilder weitenklassenweise erfolgt.

3. Verfahren nach Anspruch 1 oder 2, dadurch gekennzeichnet, dass die den herzustellenden Bildern zugrundeliegenden Bildinformationen bildweise in digitaler Form vorliegen und pixelweise auf das Trägermaterial aufgezeichnet werden, und dass die Bildinformation eines Bilds in einer vorgegebenen Normalorientierung oder gegenüber dieser um 90° gedreht aufgezeichnet wird, wenn dadurch eine Dimension des betreffenden herzustellenden Bilds mit der Weite des aktuell zur Verfügung stehenden Trägermaterials in Übereinstimmung gebracht werden kann.

4. Verfahren nach Anspruch 3, dadurch gekennzeichnet, dass jedes Bild des Satzes der herzustellenden Bilder nach Massgabe seines Formats einer von einer Anzahl den vorgegebenen Weiten der Standardträgermaterialien entsprechenden Weitenklassen zugeordnet wird, wobei die Zuordnung eines Bilds zu einer Weitenklasse erfolgt, wenn die Länge oder die Breite des Bilds mit der Weite des der betreffenden Weitenklasse entsprechenden Standardträgermaterials übereinstimmt, und dass die Aufzeichnung der Bilder weitenklassenweise auf das der jeweiligen Weitenklasse entsprechende Standardträgermaterial erfolgt.

5. Verfahren nach Anspruch 4, dadurch gekennzeichnet, dass zunächst diejenigen Bilder des Satzes herzustellender Bilder bestimmt werden, deren Länge oder Breite der Weite des aktuell zur Verfügung stehenden Trägermaterials entspricht, und dass dann die übrigen Bilder des Satzes den den anderen Standardträgermaterialien entsprechenden Weitenklassen zugeordnet werden.

6. Verfahren nach einem der Ansprüche 4-5, dadurch gekennzeichnet, dass die Zuordnung zu einer Weitenklasse in der Rangfolge der Häufigkeit der unterschiedlichen auftretenden Werte von Länge und Breite der herzustellenden Bilder erfolgt.

7. Verfahren nach Anspruch 3, dadurch gekennzeichnet, dass die Bilder des Satzes der herzustellenden Bilder nach Massgabe ihres Formats Weitenklassen zugeordnet werden, welche den unterschiedlichen auftretenden Werten der Länge und der Breite der Bilder entsprechen, dass die Häufigkeiten der unterschiedlichen auftretenden Werte von Länge und Breite der Bilder ermittelt werden, dass den einzelnen Weitenklassen jeweils alle diejenigen Bilder zugeordnet werden, deren Länge oder Breite mit dem der jeweiligen Weitenklasse entsprechenden Wert übereinstimmt, wobei die Zuordnung zu einer Weitenklasse in der Rangfolge der Häufigkeit des der Weitenklasse entsprechenden Werts erfolgt, und dass die Aufzeichnung der Bildinformationen der herzustellenden Bilder weitenklassenweise erfolgt, wobei jeweils alle einer Weitenklasse zugeordneten Bilder unmittelbar aufeinanderfolgend erzeugt werden.

8. Verfahren nach Anspruch 7, dadurch gekennzeichnet, dass zunächst diejenigen Bilder des Satzes herzustellender Bilder bestimmt und einer Weitenklasse zugeordnet werden, deren Länge oder Breite der Weite des aktuell zur Verfügung stehenden Trägermaterials entspricht, und dass dann die Zuordnung der übrigen Bilder des Satzes zu weiteren Weitenklassen erfolgt.

9. Verfahren nach einem der Ansprüche 3-8, dadurch gekennzeichnet, dass die Zuordnung der Bilder zu Weitenklassen derart erfolgt, dass die Gesamtanzahl der Weitenklassen, denen Bilder zugeordnet sind, minimal ist.

10. Verfahren nach einem der Ansprüche 3-9, dadurch gekennzeichnet, dass die Bildinformationen derjenigen Bilder, die der dem aktuell zur Verfügung stehenden Trägermaterial entsprechenden Weitenklasse angehören, zuerst aufgezeichnet werden.

11. Verfahren nach einem der Ansprüche 3-10, dadurch gekennzeichnet, dass die Bildinformationen derjenigen Bilder zuletzt aufgezeichnet werden, deren Weitenklasse statistisch am häufigsten auftritt.

12. Verfahren nach einem der Ansprüche 3-11, dadurch gekennzeichnet, dass die Bildinformationen derjenigen Bilder zuletzt aufgezeichnet werden, deren Weitenklasse in einem anschliessenden Satz von herzustellenden Bildern vertreten ist.
